(19) Europäisches Patentamt
European Patent Office
Office européen des brevets

(11) **EP 2 878 811 B1**

(12) **EUROPEAN PATENT SPECIFICATION**

(45) Date of publication and mention
of the grant of the patent:
**14.04.2021 Bulletin 2021/15**

(51) Int Cl.:
**F03D 7/04** (2006.01)　　　**F03D 7/02** (2006.01)

(21) Application number: **13382485.4**

(22) Date of filing: **29.11.2013**

(54) **METHODS OF OPERATING A WIND TURBINE, AND WIND TURBINES**

VERFAHREN ZUM BETREIBEN EINER WINDTURBINE UND WINDTURBINEN

PROCÉDÉ DE FONCTIONNEMENT D'UNE ÉOLIENNE ET ÉOLIENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2015 Bulletin 2015/23**

(73) Proprietor: **GE Renewable Technologies Wind
B.V.**
**4817 PA Breda (NL)**

(72) Inventor: **Guadayol Roig, Marc
08225 Terrassa (ES)**

(74) Representative: **de Rooij, Mathieu Julien et al
Bardehle Pagenberg S.L.
Avenida Diagonal 420, 1° 1a
08037 Barcelona (ES)**

(56) References cited:
**WO-A2-2010/060772　　US-A1- 2013 106 107**

• **ARNE KOERBER ET AL: "Combined Feedback
Feedforward Control of Wind Turbines Using
State-Constrained Model Predictive Control",
IEEE TRANSACTIONS ON CONTROL SYSTEMS
TECHNOLOGY, IEEE SERVICE CENTER, NEW
YORK, NY, US, vol. 21, no. 4, 1 July 2013
(2013-07-01), pages 1117-1128, XP011515138,
ISSN: 1063-6536, DOI:
10.1109/TCST.2013.2260749**
• **HAIYANG ZHENG ET AL: "Anticipatory Control
of Wind Turbines With Data-Driven Predictive
Models", IEEE TRANSACTIONS ON ENERGY
CONVERSION, IEEE SERVICE CENTER,
PISCATAWAY, NJ, US, vol. 24, no. 3, 1 September
2009 (2009-09-01), pages 766-774, XP011275772,
ISSN: 0885-8969, DOI: 10.1109/TEC.2009.2025320**
• **HOVGAARD TOBIAS GYBEL ET AL: "MPC for
wind power gradients - utilizing forecasts, rotor
inertia, and central energy sto", 2013 EUROPEAN
CONTROL CONFERENCE (ECC), EUCA, 17 July
2013 (2013-07-17), pages 4071-4076,
XP032526608,**

**Description**

The present disclosure relates to methods of operating a wind turbine, and wind turbines suitable for such methods.

BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

A variable speed wind turbine may typically be controlled by varying the generator torque and the pitch angle of the blades. As a result, aerodynamic torque, rotor speed and electrical power generated will vary.

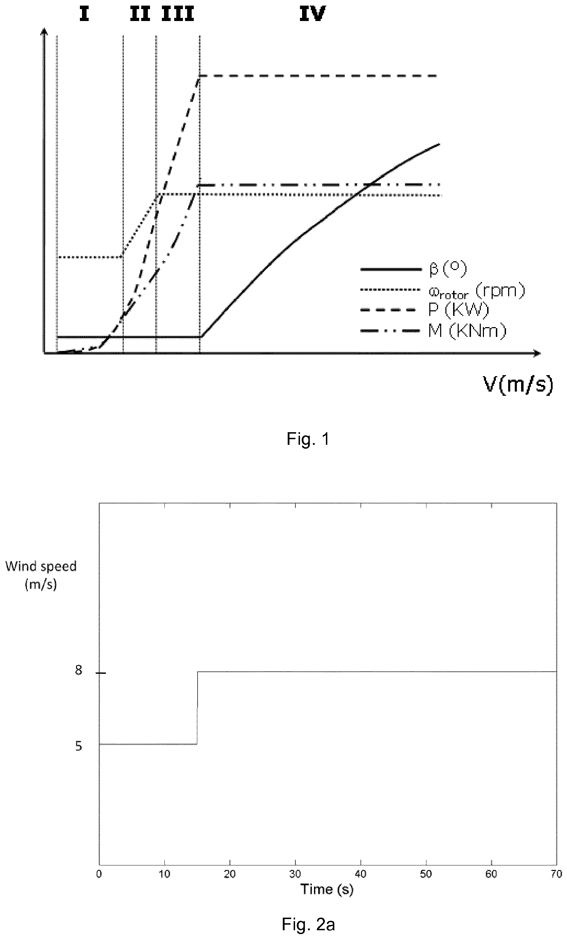

A common prior art control strategy of a variable speed wind turbine may be described with reference to figure 1. In figure 1, the operation of a typical variable speed wind turbine is illustrated in terms of the pitch angle ($\beta$), the electrical power generated (P), the generator torque (M) and the rotational velocity of the rotor ($\omega$), as a function of the wind speed.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades so as to capture maximum energy. In general, in the second operational range, the pitch angle of the blades may be substantially constant, although the optimal blade setting may theoretically depend on the instantaneous wind speed. In order to achieve this objective, the generator torque and rotor speed may be varied so as to keep the tip speed ratio $\lambda$ (tangential velocity of the tip of the rotor blades divided by the prevailing wind speed) constant so as to maximize the power coefficient $C_p$.

In order to maximize power output and keep $C_p$ constant at its maximum value, the rotor torque may be set in accordance with the following equation: $T = k.\omega^2$, wherein k is a constant, and $\omega$ is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a so-called power curve, such as the one shown in figure 1. Such a power curve may reflect the optimum operation of the wind turbine under steady-state conditions and under conditions of uniform wind speed over the rotor swept area (the area swept by the blades of the wind turbine).

If the wind is not uniform over the swept area and/or if the wind is variable, a steady state power such as the one depicted in figure 1 does not necessarily lead to maximum energy generation of the wind turbine. Let's suppose a situation in which a wind speed is given and the wind speed changes relatively rapidly. The new optimum operating point at the new wind speed may be known from the power curve, but how to transition to the new operating point is not given by the power curve. This transition may thus not be optimal.

Since the wind is inherently variable, the situation of transition is more the rule than the exception and in many situations wind turbine operation may thus be far from optimum.

XP011275772 ("Anticipatory Control of Wind Turbines With Data-Driven Predictive models" by Andrew Kusiak, Zhe Song and Haiyang Zheng) discloses anticipatory control based on the MPC approach applied to wind turbines.

XP032526608 ("MPC for Wind Power Gradients-Utilizing Forecasts, Rotor Inertia and Central Energy Storage" by Hovgaard et al.) discloses a method of maximizing energy delivered to the power grid under very strict grid requirement to power quality. Decentralized energy storage in the turbines' inertia combined with a central storage unit is presented as one option.

The present disclosure relates to various methods of avoiding or at least partly reducing any of the aforementioned problems.

SUMMARY

In a first aspect, a method of operating a variable speed wind turbine as a function of a wind speed is disclosed. The wind turbine has a rotor with a plurality of blades, a generator, one or more pitch mechanisms for rotating the blades around their longitudinal axes and determine pitch angles for the blades, and a system for varying a torque of the generator. The method comprises at a first moment in time estimating representative future wind speed values from the first moment in time up to a second moment in time, the second moment in time being equal to the first moment in time plus a predetermined finite period of time. The predetermined finite period of time is between 2 and 30 seconds. And the method further comprises using a control strategy to optimize a cost function indicative of an electrical energy output of the wind turbine up to the second moment in time based on the estimated representative future wind speed values by controlling (trajectories of) the torque of the generator and the pitch angles of the blades (and, optionally, of any additional controllable parameter) over the period ranging from the first moment in time to the second moment in time. The aforementioned steps are substantially continuously repeated.

In some embodiments, the cost function to be optimized is the converted aerodynamic energy from the wind, or the cost function to be optimized is the electrical energy generated plus the kinetic energy of the rotor at the second moment in time, or the cost function to be optimized is the electrical energy generated while setting a boundary condition for the rotor speed of the wind turbine at the second moment in time.

According to this aspect, a method of operating a wind turbine is provided which provides a control that also covers transitions for variable wind speeds. The wind turbine may select current operating points based on the current and future estimated wind speeds and thus on knowledge of future operating points. As such, the electrical energy produced may be optimized.

The control does not abide by a power curve designed for steady state conditions. Instead, the control assumes that the wind speed will vary in accordance with the estimated wind speed values and optimizes control over a finite period of time, i.e. up to the second moment in time, rather than continuously adapting to a new given situation.

The results of the optimization may be that in the sub-nominal zone of operation, the blades are pitched and/or that the rotor speed is not constant in the third operational range, and/or the generator torque may not abide to the quadratic law for the generator torque described before. As such, the distinction between the first, second and third operational ranges may disappear or, at least these ranges may be redefined according to different constraints.

In some embodiments, the predetermined finite period of time may be between 5 or 10 or 15 seconds and 30 seconds. In some experiments, between 7 and 12 seconds has been used satisfactorily. A balance needs to be made between the need for computational power and the optimization that may be achieved. On the one hand, an infinite horizon would be ideal if sufficiently reliable wind speeds would be known. However, the reliability of the estimated/predicted wind speeds reduces as the horizon for optimization is moved further away and additionally, the computational power needed to use this information to determine operating points (in terms of e.g. generator torque, pitch angles) would be too high. The calculation would take too long for it to be implemented. On the other hand, choosing the horizon too close would not give a lot of information for optimization, thus limiting any significant improvement on the performance of the wind turbine.

In some embodiments, estimating representative future wind speed values may comprise measuring or estimating instantaneous representative wind speed values and determining future wind speed values based on the measured or estimated wind speed values and empirical statistical information of the wind speed to determine likely future wind speed values.

In prior art control strategies, the wind is usually not measured in a direct manner. Rather, the rotational speed of the generator is used to determine the operational situation. In this aspect of the invention, wind speed values may be determined by using a nacelle mounted anemometer and determining e.g. 3 second - 5 second averages. In one alternative example, wind speed values may be determined by measuring the loads on the blades. In other alternative examples, wind speed values may be estimated based on other measurements, like e.g. generator speed, rotor speed, pitch angles, generator torque. Depending on the system used, a wind field at any given moment may be represented by a single wind speed value (e.g. assuming uniform speed over the rotor swept area) or by a plurality of wind speed values representative for different sections of the rotor swept area.

Measuring wind speeds directly is advantageous in particular in wind turbines with especially high rotor inertia. If the inertia of the rotor is high, this inherently means that the rotors are slow to react to changing wind fields. So if the control is based on the rotor speed (or the generator speed directly linked to the rotor speed), the control will be far from optimum.

By measuring the wind speed directly or estimating the wind speed and including empirical statistical information (of e.g. the wind at the specific site) for predicting future wind speeds, optimizing a cost function may be used to increase the power output.

In other embodiments, estimating representative future wind speed values may comprise measuring representative wind speeds upstream of the wind turbine. Wind speeds upstream of the wind turbine may be measured using Doppler effect instruments, such as e.g. a LIDAR or a SODAR. Depending on the circumstances, wind measurements upstream from the wind turbine may also be made using a met tower, or wind measurement devices located on other nearby wind turbines. In this respect, the information from e.g. the LIDAR is not only used to detect e.g. a potentially dangerous wind gust and adapt the wind turbine operation to such a wind gust, but rather to use the information to estimate a wind field for a finite period of time (e.g. 5 - 20 seconds) and based on this wind field, optimize the operation of the wind turbine within certain constrains (or "boundary conditions") with respect to energy generation.

In some embodiments, estimating representative future wind speed values comprises assuming the wind speed value to be constant over a rotor swept area of the wind turbine. In alternative embodiments, future wind speed values for different sections of the rotor swept area may be taken into account. This may be useful particularly, if the rotor blades comprises actuators that can adapt to these non-uniformities, e.g. flaps.

In some embodiments, using a control strategy may comprise setting a boundary condition for a minimum rotor speed of the wind turbine at the second moment in time, optionally for the rotor speed of the wind turbine at the second moment in time to be equal to the rotor speed at the first moment in time or, alternatively, equal to the rotor speed corresponding to the steady state according to figure 1 for the estimated wind speed at said second moment in time. Because a finite time period is taking into account, the control strategy may try to implement a deceleration in order to convert the kinetic energy of the rotor into electrical energy. By setting a boundary condition for the rotor speed (which may be that the future rotor speed is equal to the current rotor speed or to the theoretically "ideal" steady state rotor speed), such a deceleration of the rotor may be avoided. In these cases, the cost function to be optimized may be the electrical energy generated.

In some embodiments, the cost function to be optimized may be the electrical energy generated plus the kinetic energy of the rotor at the second moment in time. Alternatively, the cost function to be optimized may be the converted aerodynamic energy from the wind. These are two alternative methods for avoiding excessive deceleration of the rotor.

In some embodiments, the control strategy may be a Model Predictive Control (MPC) strategy, and optionally a non-linear Model Predictive Control. MPC aims at effectively solving problems of control and automation of processes that are characterized by having a complicated, multivariate and/or unstable dynamic behaviour. The control strategy underlying this type of control uses a mathematical model of the process to be controlled to predict the future behaviour of that system and, based on this future behaviour, it can predict future control signals.

MPC is part of the so-called optimal controllers, i.e. those in which actuations correspond to an optimization of a criterion. The criterion to be optimized, or the "cost function", is related to the future behaviour of the system, which is predicted by considering a dynamic model thereof, which is called the prediction model.

MPC is a flexible, open and intuitive technique, which permits dealing with linear and nonlinear, multi-variable and mono-variable systems by using the same formulation for the algorithms of the controller. Moreover, the MPC control laws respond to optimization criteria, and allow incorporating constraints in the synthesis or implementation of the controller. MPC also provides the ability of incorporating constraints in the calculations of the actuations. These constraints may be in terms of e.g. maximum allowable loads and/or maximum rotor speed etc.

In some examples, as mentioned before, the cost function to be optimized may be the electrical power generated over the finite period of time.

In any of these embodiments of this aspect, the boundary conditions may be "soft" boundary conditions or "hard" boundary conditions. Hard boundary conditions are those conditions that may never be violated and soft boundary conditions are those boundary conditions that are preferably not violated, but may occasionally be violated to a limited extent. Violation of such a soft constraint may be suitable when the expected gain in the cost function to be optimized is relatively or disproportionally high.

In some embodiments, the blades of the wind turbine may comprise one or more deformable trailing edge sections and one or more systems for deforming the deformable trailing edge sections, and wherein using a control strategy to optimize a cost function indicative of an energy output of the wind turbine based on the estimated representative future wind speed values may include determining deformations of the deformable trailing edge sections. The deformable trailing edge sections may be Continuously Deformable Trailing Edge (CDTE) and may be trailing edge flaps (such as e.g. plain flaps, slotted flaps, Gurney flaps or Fowler flaps). In these cases, extra control parameters are provided.

In another aspect, a wind turbine is provided having a rotor with a plurality of blades, a generator, one or more pitch mechanisms for rotating the blades around their longitudinal axis and determine pitch angles for the blades, a system for varying a torque of the generator. The wind turbine furthermore comprises a wind turbine controller adapted to carry out any of the aforementioned methods.

In any of the embodiments, pitch angles may be determined for each blade individually or they may be determined common for all blades (either dependent on the azimuthal position of the blades or not).

Additional objects, advantages and features of embodiments of the invention will become apparent to those skilled in the art upon examination of the description, or may be learned by practice of the invention.

BRIEF DESCRIPTION OF THE DRAWINGS

Particular embodiments of the present invention will be described in the following by way of non-limiting examples, with reference to the appended drawings, in which:

Figure 1 illustrates a typical power curve of a wind turbine; and

Figures 2a - 2e illustrate respectively a wind speed profile, and a variation of the blade pitch angles, generator torque, generator speed, and electrical power generated in response to this wind speed profile, both for a "classic" control strategy of a variable speed wind turbine and a control strategy according to an example of the present invention; and

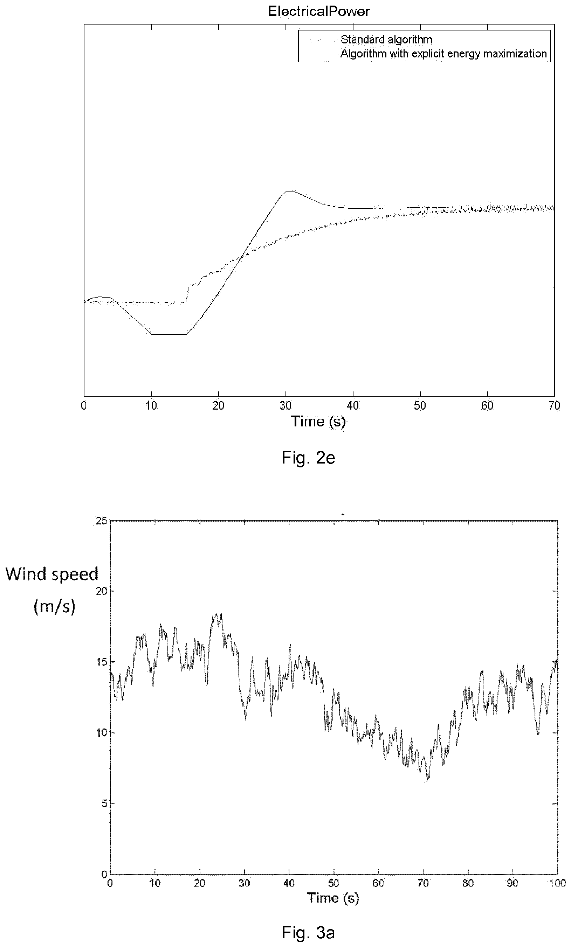

Figures 3a - 3e illustrate respectively another example of a wind speed profile, and a variation of the blade pitch angles, generator torque, generator speed, and electrical power generated in response to this wind speed profile, both for a "classic" control strategy of a variable speed wind turbine and a control strategy according to an example of the present invention.

DETAILED DESCRIPTION OF EMBODIMENTS

The power curve of figure 1 has been discussed before.

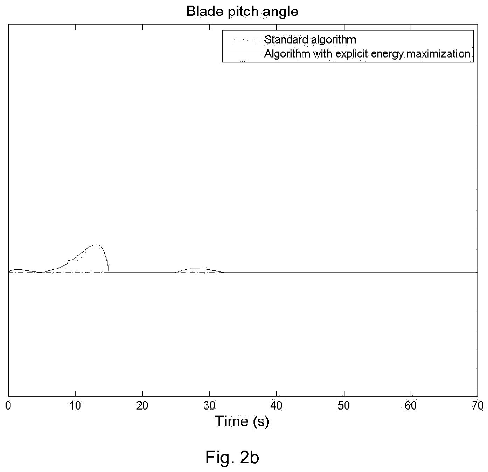

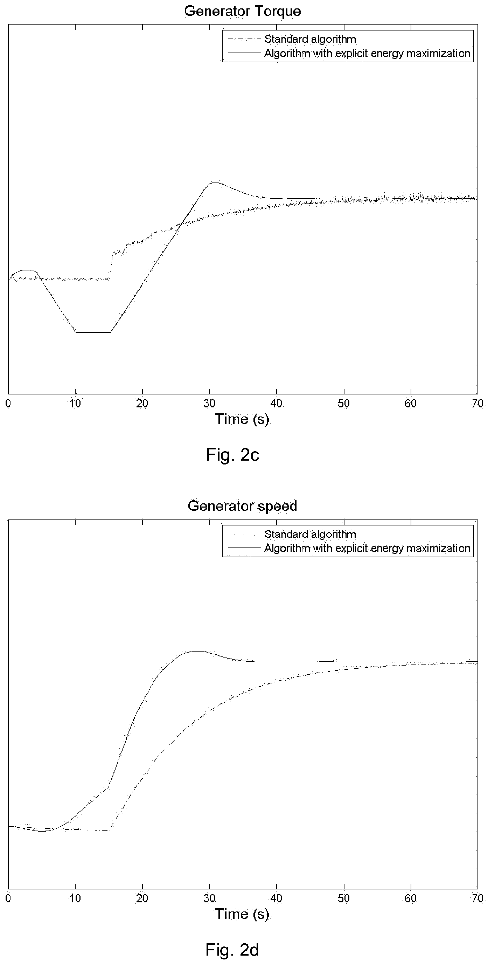

Figure 2a illustrates a wind speed profile in which a relatively sudden change in wind speed from 5 m/s to 8 m/s occurs. Figures 2b and 2c illustrate how, the pitch angle and generator torque may be varied in order to maximize energy production both in a "classic" control strategy and in an example of a method according to the present invention. Figures 2d and 2e show the resulting generator speed and electrical power production based on the pitch angle and generator torque variation according to figures 2b and 2c, both according to a classic control strategy and the same method according to the present invention. Figures 2b - 2e are based on a simulation using a commercial aeroelastic code using the wind speed profile according to figure 2a as input.

According to the classic control strategy, a typical quadratic curve which is based on the second operational range as illustrated in figure 1 is used. In the example according to the present invention, trajectories for the different operational parameters are chosen such as to optimize electrical power production.

In this example, a (non-linear) MPC strategy is implemented to optimize the cost function:

$$(\text{Eq. 1}) \qquad \max_{\omega_G Q_G \theta} E\{\int_{t=0}^{t_F} P_E(t)dt\} \ ,$$

wherein $P_E$ is the electrical power produced, t = 0 is the first moment in time and $t_F$ is the second moment in time (a finite period of time further). The finite period of time may be e.g. 15 seconds, 20 seconds, 25 seconds or 30 seconds.

The electrical power produced at any moment in time is given by:

$$(\text{Eq. 2}) \qquad P_E = Q_G . \omega_G \ ,$$

wherein QG is the generator torque demand and $\omega_G$ is the rotational speed of the generator.

The rotational speed of the generator may be determined in accordance with:

$$(\text{Eq. 3}) \qquad \dot{\omega}_G(t) = \frac{1}{I_R} . \left( Q_R(t) - N_{GBX} Q_G(t) \right),$$

wherein $Q_R$ is the aerodynamic torque of the rotor and $N_{GBX}$ is the transmission ratio of the gearbox. In direct drive wind turbines $N_{GBX} = 1$.

$$\text{(Eq. 4)} \qquad Q_R(t) = \frac{1}{2}.\rho.A.C_Q\big(\lambda(t),\theta(t)\big)\hat{u}_x^2(t) \, ,$$

wherein $\rho$ is the air density, $C_Q$ is the torque coefficient, (which is a function of $\lambda$, the tip speed ratio, and $\theta$, the pitch angle of the blades) and $\hat{u}_x$ is the axial free wind speed. The pitch angle may be directly set by a wind turbine control system. The tip speed ratio may be determined as

$$\text{(Eq. 5)} \qquad \lambda = \frac{\omega_G / N_{GBX} R}{\hat{u}_x} \, ,$$

wherein R is the blade radius.

In the MPC strategy, this cost function may be optimized within certain constraints. These constraints may include maximum and minimum generator torque, generator rotor speed, maximum and minimum pitch angles and maximum and minimum generator output power:

$$\text{(Eq. 6a)} \qquad Q_g^{MIN} \leq Q_G \leq Q_G^{\max}$$

$$\text{(Eq. 6b)} \qquad \omega_g^{MIN} \leq \omega_G \leq \omega_G^{\max}$$

$$\text{(Eq. 6c)} \qquad \theta^{MIN} \leq \theta_G \leq \theta^{\max}$$

$$\text{(Eq. 6d)} \qquad P_E^{MIN} \leq P_E \leq P_E^{\max}$$

Further possible constraints may include e.g. limit loads, conditions on accumulated (fatigue) loads and also pitch rates. In any of these embodiments of this aspect, the boundary conditions may be "soft" constraints or "hard" boundary conditions. Hard constraints are those conditions that may never be violated (e.g. maximum pitch rate is prescribed by the pitch drives employed) and soft constraints (e.g. maximum output power, or maximum load) are those constraints that are preferably not violated, but may occasionally be violated to a limited extent. Violation of such a soft constraint may be suitable when the expected gain in the cost function to be optimized is relatively or disproportionally high.

The control strategy underlying this type of control uses a mathematical model of the process to be controlled to predict the future behaviour of that system and, based on this future behaviour, it can predict future control signals.

Based on estimated future wind speed values, the cost function may be optimized by varying the generator torque and the pitch angles of the blades. The estimated future wind speed values may in reality be based on LIDAR measurements. A suitable time period for the optimization function may correspond to the prediction range (in time) of the LIDAR system employed.

With reference to figure 2b, even before the increase in wind speed occurs, the blades are pitched. This is not intuitive because the wind speed is clearly below the nominal wind speed. In a classic control strategy for variable speed wind turbines, no pitching would take place. Furthermore, the effect of knowing or estimating the future wind speed values may be seen from the fact that pitching takes place even before a change in wind speed occurs.

With reference to figure 2c, it may be seen that the generator torque also behaves in a rather unusual manner. After a slight increase, the generator torque is decreased and maintained at a relatively low level, before the wind speed increases and when the wind speed increases. Again this is counterintuitive because in a classic control strategy the generator torque should be increased to maintain a certain tip speed ratio in order to optimize $C_p$.

The results may be seen in figures 2d and 2e. In figure 2d, it may be seen that because of the chosen control strategy, the generator speed (and thus the rotor speed) is increased beyond normal values. In a first instance, the generator speed is too high, so that electrical power production is momentarily below the electrical power production as compared to the classic control strategy. However, since the algorithm takes advantage of knowing or reliably estimating future wind speed values, it is able to adapt to the future steady state condition much quicker and electrical power production is actually higher at a later stage. The example of the present invention thus consciously reduces the near future energy to gain more energy at the end of the simulation. This is not an obvious behaviour. In this case, the energy gain was about 1.5%.

In accordance with the invention, if the cost function to be optimized is the electrical energy generated, a boundary condition for the minimum rotor speed at the second moment in time $t_F$ is set. The boundary condition may be that the minimum rotor speed at the second moment in time is equal to the rotor speed at the first moment in time or a theoretically ideal staeady state rotor speed given a wind speed at the second moment in time.

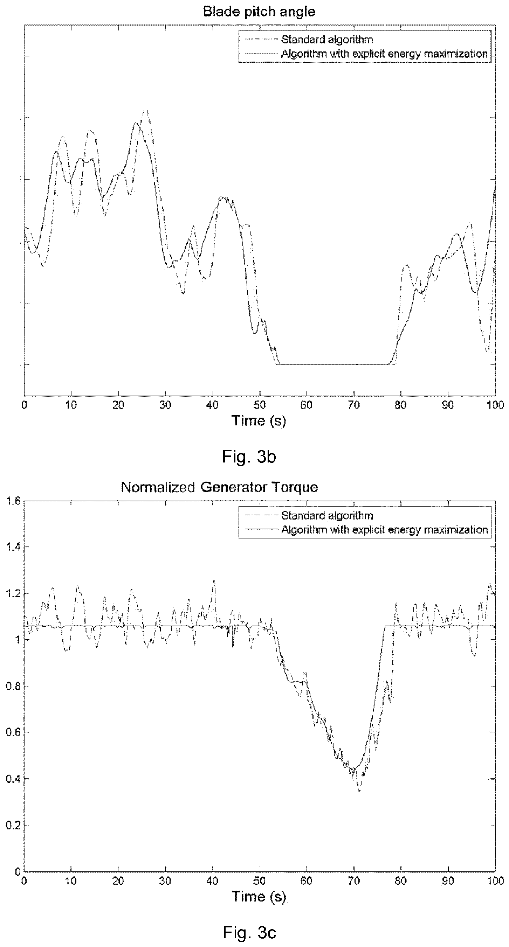

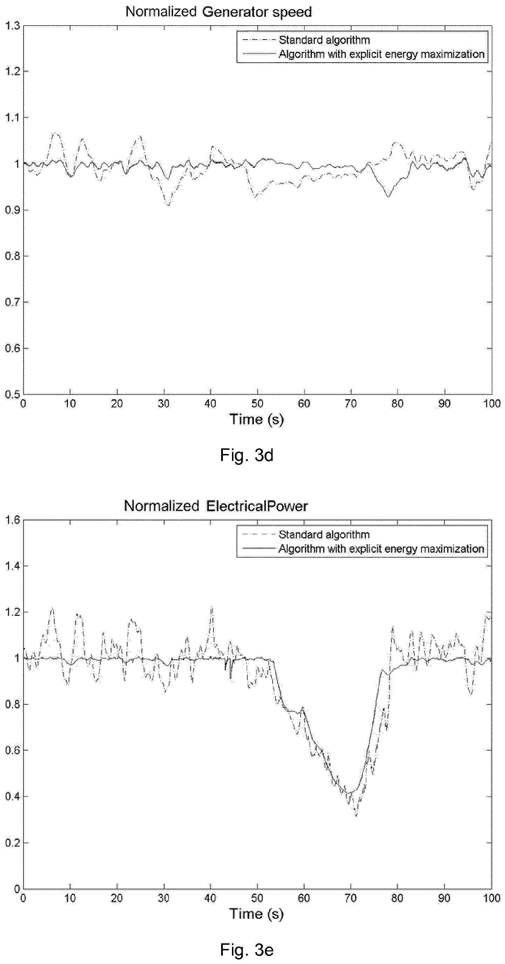

A more realistic wind speed profile variation over 100 seconds is illustrated in figure 3a. Figures 3b and 3c illustrate how, the pitch angle and generator torque may be varied in order to maximize energy production both in a "classic" control strategy and in an example of a method according to the present invention. Figures 3d and 3e show the resulting generator speed and electrical power production based on the pitch angle and generator torque variation according to figures 3b and 3c, both according to a classic control strategy and the same method according to the present invention. The figures are based on a simulation using a commercial aeroelastic code using the wind speed profile according to figure 3a as input.

In the following, just a few aspects of this simulation are highlighted.

In the first part of the simulation (up until about 50 seconds), the wind speed is above the nominal wind speed. This means that the wind turbine is operating at nominal power. It may be seen particularly in figure 3b that the pitch actuator during this period uses information of the future wind field and acts in order to adapt to wind speed variations much quicker than in the classic control strategy. The generator torque during this same period varies significantly less in the example of the invention than in the classic control strategy. The result is that generator speed and electrical power also vary significantly less than when using a classic control strategy. Overall the electrical power production may be increased. It may be said that at least a part of the improvement is due to the simple fact that the wind field is fed forward to the control.

On the other hand, an interesting portion of the simulation is from approximately 70 second - 85 seconds. In this time period, the wind speed increases significantly from below the nominal wind speed to above the nominal wind speed. Based on simply feeding forward the wind field, one would have expected to see the pitch actuator adjust quicker (compared to the classic control strategy) as the wind speed increases above the nominal wind speed. However this is not the case as may be seen in figure 3b at the time from approximately 80 - 85 seconds. Accordingly, during this same time period it may be seen in figure 3e that the electrical power production is significantly lower than in the classic control strategy.

However, the loss of electrical power production is more than compensated by the gain in electrical power production in the period from approximately 70 seconds - 80 seconds (see figure 3e). During this same period the generator speed (and thus the rotor speed) is decreased relatively rapidly, meaning that kinetic energy is converted into electrical energy during this period.

On a smaller scale throughout the simulation more examples of such "counterintuitive" behaviour may be found. In conclusion, the resulting gains in electrical power production are not merely due to the feed forward of the wind field but are also due to the explicit goal of optimization of electrical power production (within certain constraints).

In these examples, in order to avoid the control extracting kinetic energy from the rotor (thus slowing down the rotor) because of the finite time period employed in the optimization, a terminal equality constraint was set to the rotor speed, such as in Equation 6b above. In accordance with the invention, the boundary condition may be that the minimum rotor speed at the second moment in time is equal to the rotor speed at the first moment in time or a theoretically ideal staeady state rotor speed given a wind speed at the second moment in time.

In an alternative example, the cost function to be optimized may be

$$(Eq.\ 1b): \quad E_{AERO} = \int_{t=0}^{t_F} \frac{1}{2} \rho.A.C_P(\lambda,\theta)u_x^3(t)dt = \frac{1}{2}I_R\omega_R^2(t_f) - \frac{1}{2}I_R\omega_R^2(t_0) + E_{ELEC} + E_{LOSS},$$

wherein $I_R$ is the inertia of the rotor, $\omega_R$ is the rotational speed of the rotor, $E_{ELEC}$ is the electrical energy generated in the finite time prediction horizon and $E_{LOSS}$ represents the energy losses in the wind turbine.

In this example, instead of optimizing the electrical energy generated, the aerodynamic energy that is converted is optimized. An inconvenient deceleration of the rotor in order to extract the kinetic energy may thus be avoided.

In a further example, the cost function to be optimized may be the electrical energy plus kinetic energy, i.e. the function to be optimized is:

$$(Eq.\ 1c) \quad \frac{1}{2}I_R\omega_R^2 + E_{ELEC},$$

wherein $E_{ELEC}$ may be defined in accordance with Eq. 1a).

The results of the simulations illustrated in figures 2a - 2e and figures 3a - 3e may already be considered to be impressive. In less turbulent winds, the gains of the employed control strategies are probably less significant. On the other hand, if further actuators are included (such as e.g. CDTE or flaps) and non-uniform wind speed over the rotor swept area is taken into account, significant gains may be expected employing any of the methods of the present invention as compared to classic control strategies.

Although only a number of particular embodiments and examples of the invention have been disclosed herein, it will be understood by those skilled in the art that other alternative embodiments and/or uses of the invention and obvious modifications and equivalents thereof are possible. Thus, the scope of the present invention should not be limited by particular embodiments, but should be determined only by a fair reading of the claims that follow.

**Claims**

**1.** Method of operating a variable speed wind turbine as a function of a wind speed, the wind turbine having a rotor with a plurality of blades, a generator, one or more pitch mechanisms for rotating the blades around their longitudinal axes and determine pitch angles for the blades, and a system for varying a torque of the generator, the method comprising

(a) at a first moment in time estimating representative future wind speed values from the first moment in time up to a second moment in time, the second moment in time being equal to the first moment in time plus a predetermined finite period of time, wherein the predetermined finite period of time is between 2 seconds and 30 seconds,
(b) using a control strategy to optimize a cost function indicative of an electrical energy output of the wind turbine up to the second moment in time based on the estimated representative future wind speed values by controlling the torque of the generator and the pitch angles of the blades; and

substantially continuously repeating steps (a) and (b).

**2.** Method according to claim 1, wherein the predetermined finite period of time is between 3 seconds and 15 seconds.

**3.** Method according to claim 1 or 2, wherein estimating representative future wind speed values comprises measuring or estimating instantaneous representative wind speed values and estimate future wind speed values based on empirical statistical information of the wind and the measured or estimated instantaneous representative wind speed values.

**4.** Method according to claim 1 or 2, wherein estimating representative future wind speed values comprises measuring representative wind speeds upstream of the wind turbine.

**5.** Method according to claim 3 or 4, wherein estimating representative future wind speed values comprises assuming the wind speed value to be constant over a rotor swept area of the wind turbine.

**6.** Method according to any of claims 1 - 5, wherein using a control strategy comprises setting a boundary condition for the rotor speed of the wind turbine at the second moment in time.

**7.** Method according to claim 6, wherein the cost function to be optimized is the electrical energy generated.

**8.** Method according to any of claims 1 - 5, wherein the cost function to be optimized is the electrical energy generated plus the kinetic energy of the rotor at the second moment in time.

**9.** Method according to any of claims 1- 5, wherein the cost function to be optimized is the converted aerodynamic energy from the wind.

**10.** Method according to any of claims 1 - 9, wherein the control strategy is a Model Predictive Control strategy, optionally a non-linear Model Predictive Control strategy.

**11.** Method according to any of claims 1 - 10, wherein using a control strategy comprises taking electrical losses of the wind turbine into account.

**12.** Method according to any of claims 1 - 11, wherein the blades of the wind turbine comprise one or more deformable trailing edge sections and one or more systems for deforming the deformable trailing edge sections, and wherein using a control strategy to optimize a cost function indicative of an energy output of the wind turbine based on the estimated representative future wind speed values includes controlling deformations of the deformable trailing edge sections.

**13.** A wind turbine having a rotor with a plurality of blades, a generator, one or more pitch mechanisms for rotating the blades around their longitudinal axis and determine pitch angles for the blades, a system for varying a torque of the generator, and a wind turbine controller adapted to carry out a method according to any of claims 1 - 11.

**14.** A wind turbine according to claim 13, wherein the blades of the wind turbine comprise one or more deformable trailing edge sections and one or more systems for deforming the deformable trailing edge sections, and wherein the wind turbine controller is further adapted to carry out the method according to claim 12.

**15.** A wind turbine according to claim 13 or 14, further comprising a LIDAR for measuring wind speed values upstream from the wind turbine.


**Patentansprüche**

**1.** Verfahren zum Betreiben einer Windturbine mit variabler Drehzahl als Funktion einer Windgeschwindigkeit, wobei die Windturbine einen Rotor mit mehreren Blättern, einen Generator, einen oder mehrere Verstellmechanismen zum Drehen der Blätter um ihre Längsachsen und zum Bestimmen der Steigungswinkel für die Blättern und ein System zum Variieren eines Drehmoments des Generators aufweist,
wobei das Verfahren umfasst

(a) zu einem ersten Zeitpunkt das Schätzen repräsentativer zukünftiger Windgeschwindigkeitswerte vom ersten Zeitpunkt bis zu einem zweiten Zeitpunkt, wobei der zweite Zeitpunkt gleich dem ersten Zeitpunkt zuzüglich einer vorbestimmten endlichen Zeitspanne ist, wobei die vorbestimmte endliche Zeitspanne zwischen 2 Sekunden und 30 Sekunden liegt,
(b) Verwenden einer Steuerungsstrategie zum Optimieren einer Kostenfunktion, die eine elektrische Energieabgabe der Windturbine bis zum zweiten Zeitpunkt anzeigt, basierend auf den geschätzten repräsentativen zukünftigen Windgeschwindigkeitswerten durch Steuern des Drehmoments des Generators und der Verstellwinkel der Blätter; und

im Wesentlichen die kontinuierliche Wiederholung der Schritte (a) und (b).

**2.** Verfahren nach Anspruch 1, wobei die vorbestimmte endliche Zeitspanne zwischen 3 Sekunden und 15 Sekunden liegt.

**3.** Verfahren nach Anspruch 1 oder 2, wobei das Schätzen repräsentativer zukünftiger Windgeschwindigkeitswerte das Messen oder Schätzen von momentanen repräsentativen Windgeschwindigkeitswerten und das Schätzen zukünftiger Windgeschwindigkeitswerte basierend auf empirischen statistischen Informationen des Windes und den gemessenen oder geschätzten momentanen repräsentativen Windgeschwindigkeitswerten umfasst.

**4.** Verfahren nach Anspruch 1 oder 2, wobei das Schätzen repräsentativer zukünftiger Windgeschwindigkeitswerte das Messen repräsentativer Windgeschwindigkeiten stromaufwärts der Windturbine umfasst.

**5.** Verfahren nach Anspruch 3 oder 4, wobei das Schätzen repräsentativer zukünftiger Windgeschwindigkeitswerte die Annahme umfasst, dass der Windgeschwindigkeitswert über einen vom Rotor überstrichenen Bereich der Windturbine konstant ist.

**6.** Verfahren nach einem der Ansprüche 1 bis 5, wobei das Verwenden einer Steuerungsstrategie das Einstellen einer Randbedingung für die Rotordrehzahl der Windturbine zum zweiten Zeitpunkt umfasst.

**7.** Verfahren nach Anspruch 6, wobei die zu optimierende Kostenfunktion die erzeugte elektrische Energie ist.

**8.** Verfahren nach einem der Ansprüche 1 bis 5, wobei die zu optimierende Kostenfunktion die erzeugte elektrische Energie plus die kinetische Energie des Rotors zum zweiten Zeitpunkt ist.

9. Verfahren nach einem der Ansprüche 1 bis 5, wobei die zu optimierende Kostenfunktion die vom Wind umgewandelte aerodynamische Energie ist.

10. Verfahren nach einem der Ansprüche 1 bis 9, wobei die Steuerungsstrategie eine Modellvorhersagesteuerungsstrategie ist, optional eine nichtlineare Modellvorhersagesteuerungsstrategie.

11. Verfahren nach einem der Ansprüche 1 bis 10, wobei das Verwenden einer Steuerungsstrategie das Berücksichtigen elektrischer Verluste der Windturbine umfasst.

12. Verfahren nach einem der Ansprüche 1 bis 11, wobei die Blätter der Windturbine einen oder mehrere verformbare Hinterkantenabschnitte und ein oder mehrere Systeme zum Verformen der verformbaren Hinterkantenabschnitte umfassen und wobei
die Verwendung einer Steuerungsstrategie zur Optimierung einer Kostenfunktion, die eine Energieabgabe der Windturbine auf der Grundlage der geschätzten repräsentativen zukünftigen Windgeschwindigkeitswerte anzeigt, die Steuerung von Verformungen der verformbaren Hinterkantenabschnitte einschließt.

13. Windturbine mit einem Rotor mit mehreren Blättern, einem Generator, einem oder mehreren Verstellmechanismen zum Drehen der Blätter um ihre Längsachse und zum Bestimmen der Verstellwinkel für die Blättern, einem System zum Variieren eines Drehmoments des Generators und einer Windturbinensteuerung, die zur Durchführung eines Verfahrens nach einem der Ansprüche 1 bis 11 geeignet ist.

14. Windturbine nach Anspruch 13, wobei die Blätter der Windturbine einen oder mehrere verformbare Hinterkantenabschnitte und ein oder mehrere Systeme zum Verformen der verformbaren Hinterkantenabschnitte umfassen und wobei die Windturbinensteuerung ferner zur Durchführung des Verfahrens nach Anspruch 12 geeignet ist.

15. Windturbine nach Anspruch 13 oder 14, ferner umfassend einen LIDAR zum Messen von Windgeschwindigkeitswerten stromaufwärts von der Windturbine.


## Revendications

1. Procédé de fonctionnement d'une éolienne à vitesse variable en fonction d'une vitesse du vent, l'éolienne comprenant un rotor avec une pluralité de pales, un générateur, un ou plusieurs mécanismes de pas pour faire tourner les pales autour de leurs axes longitudinaux et déterminer les angles de pas pour les pales, et un système pour faire varier un couple du générateur,
le procédé comprenant

(a) à un premier instant dans le temps, l'estimation des valeurs de vitesse du vent futures représentatives depuis le premier instant dans le temps jusqu'à un second instant dans le temps, le second instant dans le temps étant égal au premier instant dans le temps plus une période de temps finie prédéterminée, dans lequel la période de temps finie prédéterminée est comprise entre 2 secondes et 30 secondes,
(b) l'utilisation d'une stratégie de commande pour optimiser une fonction de coût indicative d'une sortie d'énergie électrique de l'éolienne jusqu'au second instant dans le temps sur la base des valeurs de vitesse du vent futures représentatives estimées en commandant le couple du générateur et les angles de pas des pales ; et

la répétition de manière sensiblement continue des étapes (a) et (b).

2. Procédé selon la revendication 1, dans lequel la période de temps finie prédéterminée est comprise entre 3 secondes et 15 secondes.

3. Procédé selon la revendication 1 ou 2, dans lequel l'estimation des valeurs de vitesse du vent futures représentatives comprend la mesure ou l'estimation de valeurs de vitesse du vent représentatives instantanées et l'estimation des valeurs de la vitesse du vent futures sur la base d'informations statistiques empiriques du vent et des valeurs de vitesse du vent représentatives instantanées mesurées ou estimées.

4. Procédé selon la revendication 1 ou 2, dans lequel l'estimation des valeurs de vitesse du vent futures représentatives comprend la mesure de vitesses du vent représentatives en amont de l'éolienne.

5. Procédé selon la revendication 3 ou 4, dans lequel l'estimation des valeurs de vitesse du vent futures représentatives comprend la supposition que la valeur de la vitesse du vent est constante sur une surface balayée par le rotor de l'éolienne.

6. Procédé selon l'une quelconque des revendications 1 à 5, dans lequel l'utilisation d'une stratégie de commande comprend l'établissement d'une condition limite pour la vitesse du rotor de l'éolienne au second instant dans le temps.

7. Procédé selon la revendication 6, dans lequel la fonction de coût à optimiser est l'énergie électrique générée.

8. Procédé selon l'une quelconque des revendications 1 à 5, dans lequel la fonction de coût à optimiser est l'énergie électrique générée plus l'énergie cinétique du rotor au second instant dans le temps.

9. Procédé selon l'une quelconque des revendications 1 à 5, dans lequel la fonction de coût à optimiser est l'énergie aérodynamique convertie du vent.

10. Procédé selon l'une quelconque des revendications 1 à 9, dans lequel la stratégie de commande est une stratégie de commande prédictive à base de modèle, éventuellement une stratégie de commande prédictive à base de modèle non linéaire.

11. Procédé selon l'une quelconque des revendications 1 à 10, dans lequel l'utilisation d'une stratégie de commande comprend la prise en compte des pertes électriques de l'éolienne.

12. Procédé selon l'une quelconque des revendications 1 à 11, dans lequel les pales de l'éolienne comprennent une ou plusieurs sections de bord de fuite déformables et un ou plusieurs systèmes pour déformer les sections de bord de fuite déformables, et dans lequel l'utilisation d'une stratégie de commande pour optimiser une fonction de coût indicative d'une sortie d'énergie de l'éolienne sur la base des valeurs de vitesse du vent futures représentatives estimées comprend la commande des déformations des sections de bord de fuite déformables.

13. Éolienne comprenant un rotor avec une pluralité de pales, un générateur, un ou plusieurs mécanismes de pas pour faire tourner les pales autour de leur axe longitudinal et déterminer des angles de pas pour les pales, un système pour faire varier un couple du générateur et un dispositif de commande d'éolienne adapté pour exécuter un procédé selon l'une quelconque des revendications 1 à 11.

14. Eolienne selon la revendication 13, dans laquelle les pales de l'éolienne comprennent une ou plusieurs sections de bord de fuite déformables et un ou plusieurs systèmes pour déformer les sections de bord de fuite déformables, et dans laquelle le dispositif de commande d'éolienne est en outre adapté pour exécuter le procédé selon la revendication 12.

15. Eolienne selon la revendication 13 ou 14, comprenant en outre un LIDAR pour mesurer des valeurs de vitesse du vent en amont de l'éolienne.

I    II III        IV

β (°)
ω_rotor (rpm)
P (KW)
M (KNm)

V(m/s)

Fig. 1

Wind speed
(m/s)

8

5

0    10    20    30    40    50    60    70
Time (s)

Fig. 2a

Blade pitch angle

Fig. 2b

Generator Torque

Fig. 2c

Generator speed

Fig. 2d

ElectricalPower

Fig. 2e

Fig. 3a

Blade pitch angle

Fig. 3b

Normalized Generator Torque

Fig. 3c

16

Normalized Generator speed

Fig. 3d

Normalized ElectricalPower

Fig. 3e

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREW KUSIAK ; ZHE SONG ; HAIYANG ZHENG.** *Anticipatory Control of Wind Turbines With Data-Driven Predictive models*

- **HOVGAARD.** *MPC for Wind Power Gradients-Utilizing Forecasts, Rotor Inertia and Central Energy Storage*